# FASCICULE DE BREVET EUROPEEN

(11) **EP 1 319 931 B1**
(45) Date de publication et mention de la délivrance du brevet: **24.08.2005**
(21) Numéro de dépôt: 01129900.5
(22) Date de dépôt: 15.12.2001
(51) Int. Cl.: G01G 3/14, G01L 1/22

(54) **Capteur de mesure**
Messwertaufnehmer
Measuring sensor

(43) Date de publication de la demande: 18.06.2003
(73) Titulaire: S.C.A.I.M.E. S.A., 74105 Annemasse (FR)
(72) Inventeur: Aumard, Jean-Pierre, 74100 Etrembières (FR); Navarro, Jean-Claude, 74100 Ville-la-Grand (FR)
(74) Mandataire: KIRKER & Cie S.A.

(56) Documents cités:
- DE-A- 3 438 498
- DE-A- 19 857 381
- US-A- 4 107 985
- US-A- 4 150 729
- US-A- 4 546 838

## Description

La présente invention a pour objet un capteur de mesure du type comportant un corps d'épreuve monolithique muni de jauges de contrainte fixées sur ce corps d'épreuve dans au moins une de ses zones de déformation élastique sous l'effet d'un effort appliqué audit corps d'épreuve.

Généralement le corps d'épreuve est formé d'un barreau déformable monolithique pouvant présenter la forme d'un parallélogramme déformable dont l'une des extrémités est fixée sur un bâti fixe et dont l'autre est agencée de manière à recevoir la charge à mesurer. De tels capteurs sont décrit par exemple dans les documents US 4.150.729, US 4.546.838 ou US 4.107.985.

La présente invention vise à la réalisation d'un tel capteur qui puisse être utilisé dans un environnement hostile ou corrosif, eau salée, chlorée ou acide, etc., ce qui oblige à protéger les jauges de contrainte pour éviter leur détérioration.

Généralement les jauges de contrainte sont protégées par un enduit ou film d'une matière résistante aux agents corrosifs. L'expérience montre néanmoins que c'est toujours cette protection qui se dégrade en premier lieu, nécessitant le remplacement du capteur bien que sa partie mécanique, le corps d'épreuve, soit encore intact.

On a proposé des capteurs dans lesquels les jauges de contrainte sont enfermées dans des cavités étanches comme cela est décrit par exemple dans les documents US 4.488.611 ou US 5.220.971. Ces réalisations nécessitent toutefois la soudure de couvercles ou d'éléments de protection métalliques sur le corps d'épreuve à proximité immédiate des zones de déformation de celui-ci, pour encapsuler de façon étanche les jauges de contrainte. Cette façon de faire permet une protection durable des jauges de contrainte mais détériore la précision et la fiabilité de la mesure. En effet, le fait de souder ces couvercles ou protections à proximité immédiate des zones de déformation du corps d'épreuve induit des modifications structurelles du matériau constitutif du corps d'épreuve dans ces zones modifiant notamment ses caractéristiques élastiques qui sont la source d'imprécisions ou d'erreurs de mesure ne pouvant pas être aisément corrigées électriquement. Une autre réalisation d'un capteur dans lequel les jauges de contraintes sont enfermées dans une cavité étanche est connue du document EP-A-1 451 538. Ce document n'est cependant à prendre en compte qu'au titre de la nouveauté en vertu de l'article 54(3) et (4) CBE.

La présente invention a pour but la réalisation d'un capteur comportant un corps d'épreuve monolithique et des jauges de contrainte encapsulées, donc protégées de l'environnement, qui obvie aux inconvénients précités c'est-à-dire qui est résistant et dont la protection des jauges n'influence pas les caractéristiques de mesure.

La présente invention a pour objet un capteur de mesure comportant un corps d'épreuve monolithique muni de jauges de contrainte qui se distingue par les caractéristiques énumérées à la revendication indépendante 1. Les modes particuliers de réalisation de l'invention sont définis dans les revendications dépendantes 2 à 11.

Le dessin annexé illustre schématiquement et à titre d'exemple quatre formes d'exécution du capteur selon l'invention.

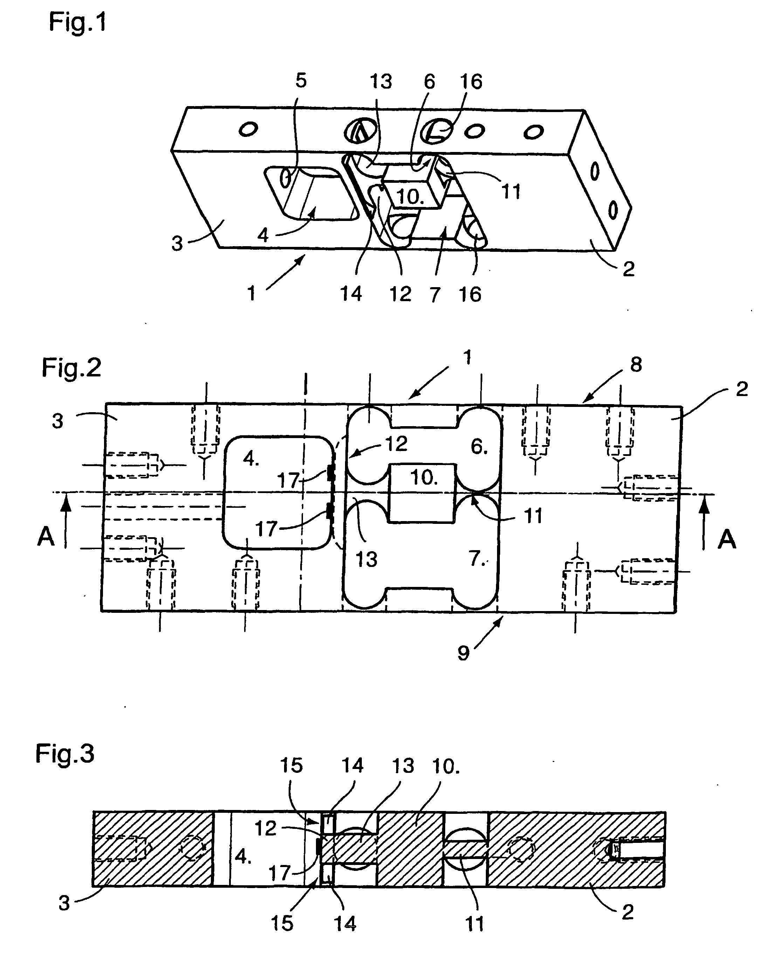

La figure 1 est une vue en perspective d'une première forme d'exécution du capteur.
La figure 2 est une vue en élévation du capteur de la figure 1.
La figure 3 est une coupe suivant la ligne A-A de la figure 2.
La figure 4 est une vue en perspective d'une seconde forme d'exécution du capteur.
La figure 5 est une élévation du capteur illustré à la figure 4.
La figure 6 est une coupe suivant la ligne B-B de la figure 5.
La figure 7 est une vue en perspective d'une troisième forme d'exécution du capteur.
La figure 8 est une vue en élévation du capteur illustré à la figure 7.
La figure 9 est une vue en coupe suivant la ligne C-C de la figure 8.
La figure 10 est une vue de la face supérieure du capteur.
La figure 11 illustre en élévation de côté une quatrième forme d'exécution du capteur selon l'invention.

Le capteur de mesure selon la présente invention comporte un corps d'épreuve monolithique constituant un parallélogramme déformable en acier, acier inoxydable ou alliages de ceux-ci, aluminium ou autre matériau élastique, dont une extrémité est destinée à être fixée sur un bâti tandis que l'autre est équipée pour recevoir une charge ou une force à mesurer. Ce corps d'épreuve est traversé transversalement par deux évidements définissant d'une part des zones d'épaisseur réduite formant les articulations du parallélogramme déformable et, d'autre part une poutre principale. Cette poutre principale est reliée par ses extrémités, d'une part directement à une première partie non déformable du corps d'épreuve et, d'autre part par l'intermédiaire d'une poutre de mesure à une seconde partie non déformable du corps d'épreuve.

Cette poutre de mesure est reliée latéralement à cette seconde partie non déformable du corps d'épreuve par des membranes minces de manière à permettre à cette poutre de mesure de se déformer sans transmettre de déformation à la seconde partie non déformable du corps d'épreuve.

En outre, le corps d'épreuve comporte encore une cavité dans sa seconde partie non déformable dont une paroi est formée partiellement au moins par lesdites membranes et la poutre de mesure. Cette cavité est destinée à recevoir les jauges de contrainte et une partie au moins du circuit électrique de mesure, elle communique avec l'extérieur du corps d'épreuve par un passage de fils et peut être obturée hermétiquement par la soudure, le collage ou la fixation hermétique de couvercles, fixation se situant sur la partie non déformable du corps d'épreuve et n'influençant en rien les caractéristiques élastiques des poutres de mesure.

Dans la première forme d'exécution, le capteur de mesure comporte un corps d'épreuve monolithique par exemple en acier inoxydable 1 comportant une première partie indéformable 2 à l'une de ses extrémités et une seconde partie indéformable 3 à son autre extrémité.

La première partie indéformable 2 du corps d'épreuve 1 comporte des organes de fixation, ici des taraudages, permettant de l'accoupler à un organe recevant une charge ou transmettant un effort à mesurer, tandis que la seconde partie indéformable 3 du corps d'épreuve comporte des taraudages permettant de la fixer sur un bâti fixe. Cette seconde partie indéformable 3 du corps d'épreuve 1 présente une cavité 4 débouchant sur au moins un côté latéral du corps d'épreuve et est reliée à une tranche de celui-ci par un passage de câbles 5.

La partie centrale, déformable élastiquement, du corps d'épreuve 1 comporte deux ouvertures traversantes 6, 7 définissant avec les tranches supérieure 8 et inférieure 9 du corps d'épreuve 1 des charnières ou amincissements flexibles permettant au corps d'épreuve de se déformer comme un parallélogramme déformable.

Entre elles ces ouvertures 6, 7 définissent une poutre principale 10 reliée par une liaison mince 11 à la première partie non déformable 2 du corps d'épreuve 1 et solidaire d'une poutre de mesure 12 par un encastrement 13. La poutre de mesure 12 est située entre deux fraisures 14 faisant en sorte que cette poutre de mesure 12 soit reliée latéralement par deux membranes fines 15 à la seconde partie non déformable 3 du corps d'épreuve 1, de manière à ce que cette poutre de mesure 12 puisse se déformer élastiquement sans que cette déformation ne soit transmise à cette seconde partie non déformable 3.

Les membranes fines 15, de 0,1 à 1,5 mm de préférence 01 à 0,7 mm, séparent les ouvertures 6, 7 de la cavité 4 et découplent la poutre de mesure 12 de la seconde partie non déformable 3 du corps d'épreuve 1.

Dans l'exemple illustré, des passages 16 sont prévus pour réduire la rigidité des amincissements formant les charnières du parallélogramme déformable que constitue le corps d'épreuve 1.

Des jauges de contrainte 17 sont fixées sur la face longitudinale de la poutre de mesure 12 se situant à l'intérieur de la cavité 4, entre les membranes 15 et sont reliées à un circuit électrique de mesure situé soit à l'extérieur du corps d'épreuve 1, soit partiellement au moins dans la cavité 4 du corps d'épreuve. Ces jauges de contrainte 17 et/ou la partie du circuit électrique située dans la cavité 4 sont reliées par un câble (non illustré) passant par le passage 5 de façon étanche pour être raccordées à l'appareillage de mesure extérieur au corps d'épreuve 1.

La cavité 4 du corps d'épreuve 1 est alors obturée, scellée, par deux couvercles (non illustrés) appliqués sur les faces latérales du corps d'épreuve 1 de manière à fermer les ouvertures de la cavité 4. Ces couvercles sont soudés, collés ou fixés de façon étanche sur la partie non déformable 3 du corps d'épreuve 1.

Dans une telle exécution les soudures, collages ou fixations étanches effectués autour des ouvertures de la cavité 4 pour fixer les couvercles d'obturation de cette cavité 4 n'affectent en rien les poutres 10 et 12 du corps d'épreuve dont on mesure la déformation. Ces fixations n'affectent donc en rien ni la précision ni la fiabilité de la mesure.

On a donc ainsi réalisé un capteur muni d'un corps d'épreuve monolithique dont les jauges de contrainte et éventuellement tout ou partie du circuit électrique de mesure sont encapsulés dans une cavité du corps d'épreuve 1 obturée de façon étanche. L'encapsulage des jauges de contrainte dans le corps d'épreuve se fait par soudure, collage ou fixation étanche de couvercles sur une partie du corps d'épreuve ne participant pas à la déformation servant à la mesure. Ainsi on a réalisé un capteur étanche fiable, inaltérable et précis.

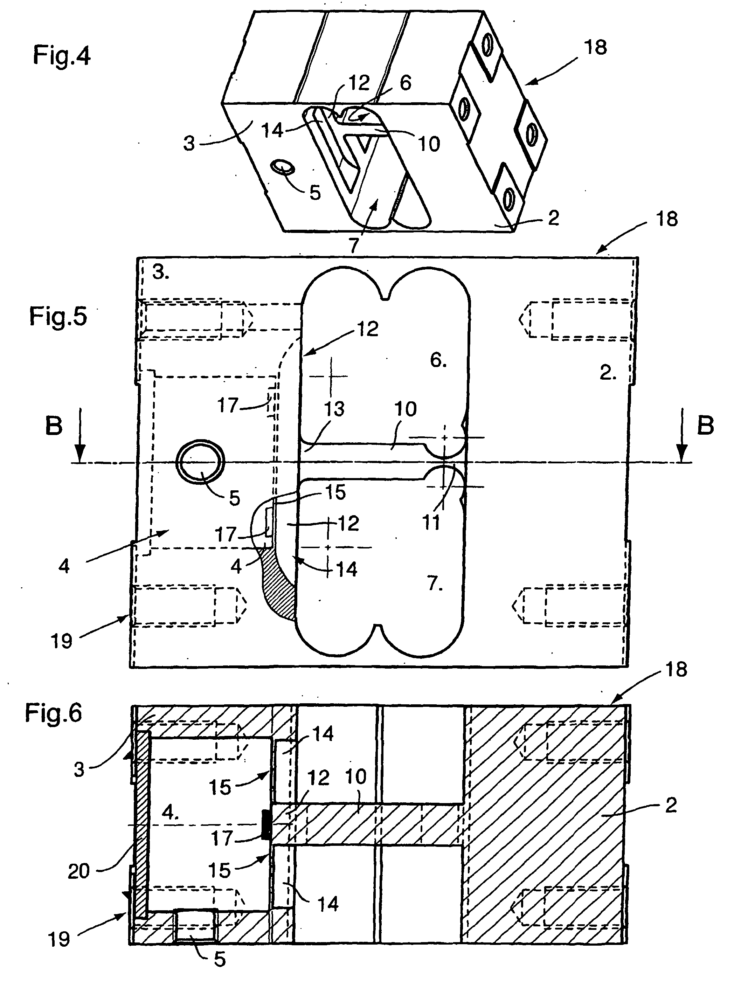

Dans la forme d'exécution illustrée aux figures 4 à 6 le corps d'épreuve 1 présente la forme d'un barreau monolithique 18 comportant comme dans la première forme d'exécution deux parties d'extrémités non déformables 2, 3 et une partie centrale comportant les ouvertures 6, 7, la poutre principale 10 et les amincissements formant charnière. On retrouve donc un parallélogramme déformable avec une poutre principale centrale.

La poutre principale 10 est reliée par une liaison 11 à la partie non déformable 2 du corps d'épreuve, tandis que son autre extrémité est encastrée dans la poutre de mesure 12 solidaire de la partie non déformable 3 du corps d'épreuve 18. Cette poutre de mesure 12 est découplée mécaniquement de la partie non déformable 3 par des fraisures latérales 14 comme dans la première forme d'exécution.

Dans cette seconde forme d'exécution la cavité 4 s'ouvre sur la tranche frontale 19 de la partie non déformable 3 du corps d'épreuve 18 et comporte un passage de câble 5 débouchant sur une face latérale du corps d'épreuve 18.

Une fois que les jauges de contrainte 17 sont mises en place et raccordées, la cavité 4 est scellée de façon étanche par soudure, collage ou fixation étanche d'une plaque de fermeture 20 sur la face frontale 19 de la partie non déformable 3 du corps d'épreuve 18.

On retrouve ici les mêmes avantages que ceux du capteur selon la première forme d'exécution, à savoir une étanchéité totale, efficace et inaltérable de la chambre logeant les jauges de contrainte 17 et tout ou partie du circuit électrique, tout en évitant de modifier les caractéristiques du matériau du corps d'épreuve au voisinage de ses parties déformables servant à la mesure.

Cette seconde forme d'exécution permet d'avoir accès à la cavité 4 par une extrémité du corps d'épreuve tandis que dans la première forme d'exécution l'accès à cette cavité se fait par une ou les deux faces latérales du corps d'épreuve.

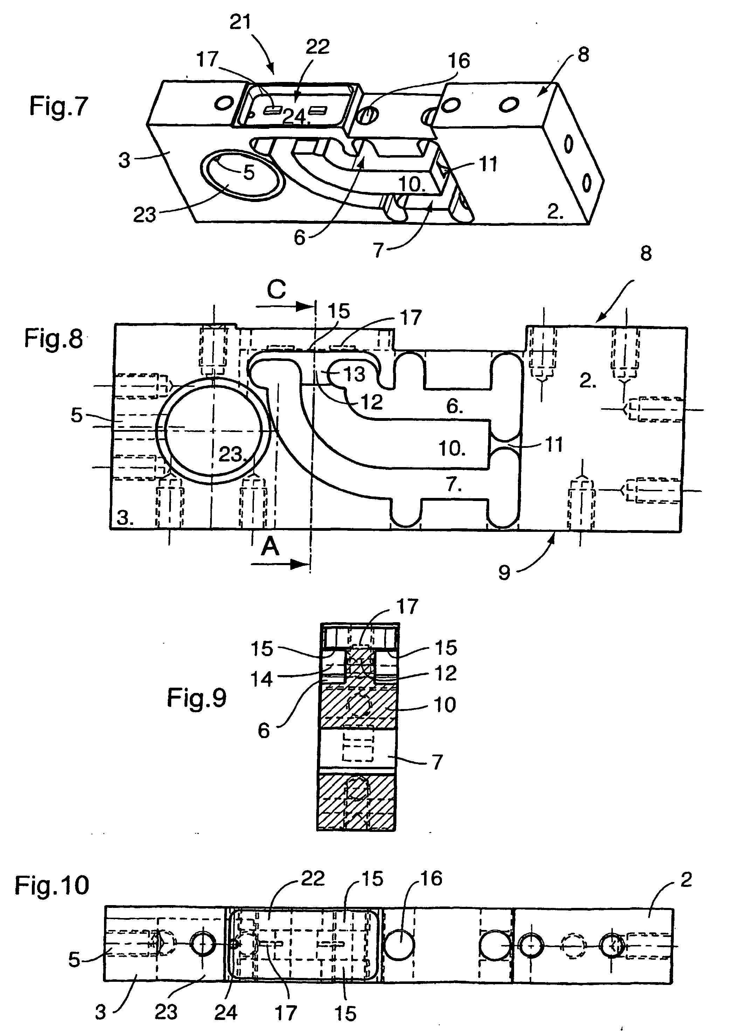

Dans la troisième forme d'exécution illustrée aux figures 7 à 10 le corps d'épreuve 1 se présente sous la forme d'une plaque rectangulaire monolithique présentant également deux zones non déformables 2, 3 et constituant un parallélogramme déformable de par les ouvertures 6, 7 pratiquées dans sa partie centrale. Dans cette forme d'exécution la poutre principale 10 est courbe, reliée par une liaison 11 par une extrémité à la partie non déformable 2 et encastrée à son autre extrémité à une poutre de mesure 12 solidaire de la partie non déformable 3 du corps d'épreuve mais découplée de celui-ci par des membranes latérales 15 formant avec la face supérieure de la poutre de mesure 12 le fond d'une première cavité 22 débouchant sur la tranche supérieure 8 du corps d'épreuve. Une seconde cavité 23 pratiquée dans la partie non déformable 3 du corps d'épreuve débouche sur la face latérale avant de ce corps d'épreuve. Un passage 24 relie la première cavité 22 à la seconde cavité 23 tandis qu'un passage de câble 5 relie la seconde cavité 23 à la tranche d'extrémité de la partie non déformable 3 du corps d'épreuve.

Dans cette forme d'exécution des couvercles (non illustrés) sont placés sur les ouvertures des cavités 22 et 23 et sont soudés, collés ou fixés de façon étanche sur la partie non déformable 3 du corps d'épreuve.

Comme ici la première cavité 22 est de faible volume elle abrite seulement les jauges de contrainte 17 et le circuit électrique de mesure est logé dans la seconde cavité 23.

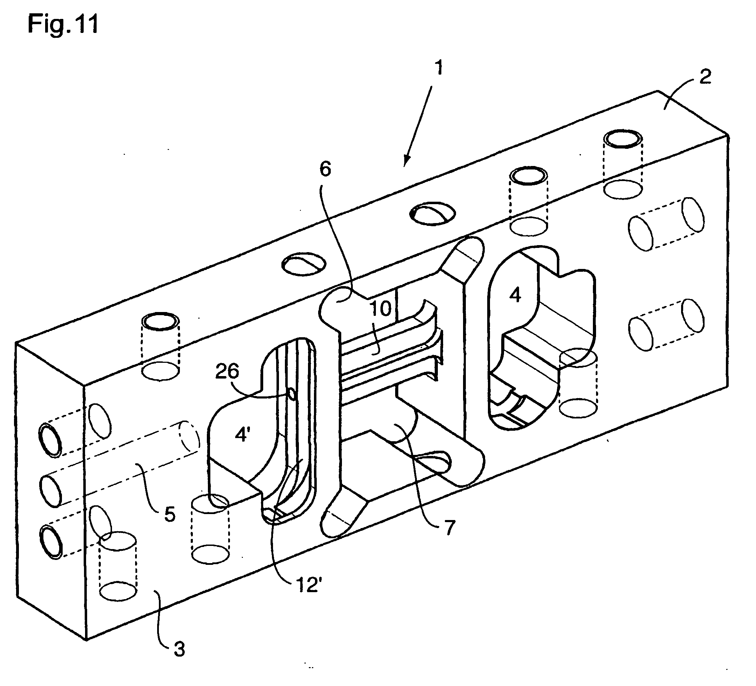

Dans la quatrième forme d'exécution illustrée à la figure 11 le corps d'épreuve 1 se présente sous la forme d'un barreau, de section rectangulaire ou carrée, monolithique, présentant aussi deux zones non déformables 2, 3 et constituant un parallélogramme déformable de par les ouvertures 6, 7 pratiquées dans sa partie centrale. Dans cette forme d'exécution la poutre principale 10 présente une section en forme de croix et est encastrée par chacune de ses extrémités dans une poutre de mesure 12, 12' solidaires respectivement des parties non déformables 3 et 2. Ces poutres de mesure 12, 12' sont découplées des parties non déformables respectives 2, 3 par des membranes 15, 15' formant avec la face arrière de poutres de mesure 12, 12' le fond de deux cavités 4, 4' débouchant sur au moins une des faces latérales du corps d'épreuve 1. Un passage 26 traversant l'âme de la poutre principale 10 relie ces deux cavités 4, 4'. La cavité 4' est reliée par un passage de câble 5 à la tranche d'extrémité de la partie non déformable 3.

Dans cette forme d'exécution des couvercles (non illustrés) sont placés sur les ouvertures des cavités 4, 4' et sont soudés, collés ou fixés de façon étanche sur les parties non déformables 2, 3 du corps d'épreuve 1.

Les cavités 4 et 4' peuvent ne pas déboucher sur la même face latérale du corps d'épreuve 1 ou au contraire déboucher sur les deux faces de celui-ci. La poutre principale peut présenter une section de forme différente, par exemple carrée ou rectangulaire.

Ainsi, comme on le voit, dans toutes les formes d'exécution le corps d'épreuve monolithique comporte deux zones ou parties non déformables 2, 3 formant ses extrémités et une zone ou partie centrale formant un parallélogramme déformable. Une poutre principale 10 est encastrée par au moins une de ses extrémités sur ou dans la partie centrale d'une poutre de mesure 12 faisant partie d'une ou des parties non déformables 2, 3 du corps d'épreuve 1 mais étant mécaniquement découplée par rapport à celui-ci grâce à des fraisures 14 et des membranes 15. Ces membranes 15 et la face de la poutre de mesure 12 solidaire d'une partie non déformable 2, 3 du corps d'épreuve constituent une paroi d'au moins une cavité usinée dans la ou les parties non déformables 2, 3 du corps d'épreuve, cavités débouchant sur une face libre de cette partie non déformable du corps d'épreuve. Un ou des couvercles soudés, collés ou fixés de façon étanche sur la ou les parties non déformables du corps d'épreuve obturent de façon étanche et inaltérable les cavités. On obtient ainsi un capteur monolithique étanche exempt de fixations au voisinage des parties déformables du corps d'épreuve de sorte que celles-ci ne sont pas altérées et que la fiabilité et la précision du capteur soit optimale.

## Revendications

1. Capteur de mesure étanche comportant un corps d'épreuve (1) monolithique comportant à ses extrémités une première (2) et une seconde (3) parties non déformables reliées par une partie centrale formant un parallélogramme déformable, la partie centrale du corps d'épreuve (1) comportant deux ouvertures traversantes (6, 7) définissant entre elles une poutre principale (10) , **caractérisé par le fait qu'**au moins une extrémité de ladite poutre principale est encastrée par un encastrement (13) dans une poutre de mesure (12) solidaire d'une partie non déformable (2, 3) du corps d'épreuve mais découplée mécaniquement par rapport à celle-ci; **par le fait qu'**une des parties non déformables (2, 3) du corps d'épreuve au moins comporte au moins une cavité (4, 4', 22) dont une paroi est formée par la poutre de mesure (12) et par deux membranes. (15) situées de part et d'autre de cette poutre de mesure (12), **par le fait que** des jauges de contrainte (17) sont fixées dans la cavité (4) sur le dos de la poutre de mesure (12) et **par le fait que** la cavité (4) est obturée par un couvercle (20) soudé, collé ou fixé de façon étanche sur la partie non déformable (2, 3) correspondante du corps d'épreuve.

2. Capteur selon la revendication 1, **caractérisé par le fait que** l'encastrement de l'extrémité de la poutre principale (10) sur la poutre de mesure (12) est rigide et permet de transmettre un couple de la poutre principale (10) à la poutre de mesure (12).

3. Capteur selon l'une des revendications 1 ou 2, **caractérisé par le fait que** la poutre de mesure (12) est reliée latéralement à la seconde partie non déformable (3) du corps d'épreuve par deux membranes minces (15) permettant une déformation de la poutre de mesure (12) par rapport au corps d'épreuve (1).

4. Capteur selon l'une des revendications 1à 3, **caractérisé par le fait que** l'une des extrémités de la poutre principale (10) est reliée à la première partie non déformable (2) du corps d'épreuve (1), est flexible et ne transmet pas de couple.

5. Capteur selon l'une des revendications précédentes, **caractérisé par le fait que** la cavité (4) traverse transversalement la seconde partie non déformable (3) du corps d'épreuve (1) et est reliée à la tranche d'extrémité de cette partie non déformable (3) par un passage de câble (5), les deux faces de cette cavité (4) étant obturées par des couvercles soudés, collés ou fixés de façon étanche sur la seconde partie non déformable (3) du corps d'épreuve.

6. Capteur selon l'une des revendications 1 à 4, **caractérisé par le fait que** la cavité (4) débouche sur la tranche d'extrémité de la seconde partie non déformable (3) du corps d'épreuve (1) et qu'elle est reliée par un passage de câble (5) à l'une des faces latérales du corps d'épreuve (1), l'ouverture de cette cavité (4) étant obturée par un couvercle soudé, collé ou fixé de façon étanche sur la seconde partie non déformable (3) du corps d'épreuve.

7. Capteur selon l'une des revendications 1 à 6, **caractérisé par le fait que** la poutre principale (10) est rectiligne.

8. Capteur selon l'une des revendications 1 à 4, **caractérisé par le fait que** la poutre principale (10) est incurvée et que la cavité (4) débouche sur une des tranches supérieure (8) ou inférieure (9) de la seconde partie non déformable (3) du corps d'épreuve (1), cette cavité étant obturée par un couvercle soudé sur cette partie (3) du corps d'épreuve (1).

9. Capteur selon la revendication 8, **caractérisé par le fait qu'**une seconde cavité (23) est pratiquée dans la seconde partie non déformable (3) du corps d'épreuve (1), les cavités (4) et (23) étant reliées par un passage (24); cette seconde cavité (23) étant reliée à l'extérieur du corps d'épreuve (1) par un passage de câble (5) et obturée par un couvercle soudé, collé ou fixé de façon étanche sur cette seconde partie non déformable (3) du corps d'épreuve.

10. Capteur selon l'une des revendications 1 à 7, **caractérisé par le fait qu'**il comporte deux cavités (4, 4') situées chacune dans une des zones non déformables (2, 3) du corps d'épreuve (1) et deux poutres de mesure (12, 12') encastrées chacune sur une des extrémités de la poutre principale (10) reliées par des membranes minces (15, 15') aux parties non déformables (2, 3).

11. Capteur selon la revendication 10, **caractérisé par le fait que** les cavités (4, 4') sont reliées par un passage (26) traversant la poutre principale (10), l'une des cavités (4, 4') étant ouverte sur au moins une face latérale du corps d'épreuve et **par le fait que** les deux cavités (4, 4') sont obturées de façon étanche par un couvercle.

## Patentansprüche

1. Dichter Messwertaufnehmer, einen monolithischen Prüfkörper (1) umfassend, der an seinen Enden einen ersten (2) und einen zweiten (3) nicht verformbaren Abschnitt aufweist, die durch einen zentralen Abschnitt verbunden sind und ein verformbares Parallelogramm bilden, wobei der zentrale Abschnitt des Prüfkörpers (1) zwei durchgehende Öffnungen (6, 7) aufweist, die zwischen sich einen Hauptbalken (10) definieren, **dadurch gekennzeichnet, dass** zumindest ein Ende des Hauptbalkens durch eine Einspannung (13) in einen Messbalken (12) eingespannt ist, der fest mit einem nicht verformbaren Abschnitt (2, 3) des Prüfkörpers verbunden, aber mechanisch davon abgekoppelt ist; **dadurch**, dass zumindest einer der nicht verformbaren Abschnitte (2, 3) des Prüfkörpers einen Hohlraum (4, 4', 22) aufweist, dessen eine Wand durch den Messbalken (12) und zwei Membranen (15) gebildet wird, die sich zu beiden Seiten dieses Messbalkens (12) befinden, **dadurch**, dass Dehnungsmessstreifen (17) auf dem Rücken des Messbalkens (12) im Hohlraum (4) angebracht sind, und **dadurch**, dass der Hohlraum (4) durch einen Deckel (20) verschlossen ist, der dicht auf den entsprechenden nicht verformbaren Abschnitt (2, 3) des Prüfkörpers aufgeschweisst, aufgeklebt oder darauf fixiert ist.

2. Aufnehmer nach Anspruch 1, **dadurch gekennzeichnet, dass** die Einspannung des Endes des Hauptbalkens (10) auf dem Messbalken (12) starr ist und gestattet, ein Kräftepaar vom Hauptbalken (10) auf den Messbalken (12) zu übertragen.

3. Aufnehmer nach einem der Ansprüche 1 oder 2, **dadurch gekennzeichnet, dass** der Messbalken (12) mit dem zweiten nicht verformbaren Abschnitt (3) des Prüfkörpers seitlich über zwei dünne Membranen (15) verbunden ist, was eine Verformung des Messbalkens (12) relativ zum Prüfkörper (1) ermöglicht.

4. Aufnehmer nach einem der Ansprüche 1 bis 3, **dadurch gekennzeichnet, dass** eines der Enden des Hauptbalkens (10) mit dem ersten nicht verformbaren Abschnitt (2) des Prüfkörpers (1) verbunden ist, flexibel ist und kein Kräftepaar überträgt.

5. Aufnehmer nach einem der vorangehenden Ansprüche, **dadurch gekennzeichnet, dass** der Hohlraum (4) quer durch den zweiten nicht verformbaren Abschnitt (3) des Prüfkörpers (1) hindurchgeht und mit der Endfläche dieses nicht verformbaren Abschnitts (3) durch eine Kabeldurchführung (5) verbunden ist, wobei die beiden Seiten dieses Hohlraumes (4) durch Deckel verschlossen sind, die dicht auf den zweiten nicht verformbaren Abschnitt (3) des Prüfkörpers aufgeschweisst, aufgeklebt oder darauf fixiert sind.

6. Aufnehmer nach einem der Ansprüche 1 bis 4, **dadurch gekennzeichnet, dass** der Hohlraum (4) an der Endfläche des zweiten nicht verformbaren Abschnitts (3) des Prüfkörpers (1) mündet und dass er über eine Kabeldurchführung (5) mit einer der Seitenflächen des Prüfkörpers (1) verbunden ist, wobei die Öffnung dieses Hohlraumes (4) durch einen Deckel verschlossen ist, der dicht auf den zweiten nicht verformbaren Abschnitt (3) des Prüfkörpers aufgeschweisst, aufgeklebt oder darauf fixiert ist ist.

7. Aufnehmer nach einem der Ansprüche 1 bis 6, **dadurch gekennzeichnet, dass** der Hauptbalken (10) gerade ist.

8. Aufnehmer nach einem der Ansprüche 1 bis 4, **dadurch gekennzeichnet, dass** der Hauptbalken (10) gekrümmt ist und dass der Hohlraum (4) an einer der Endflächen, der oberen (8) oder der unteren (9), des zweiten nicht verformbaren Abschnitts (3) des Prüfkörpers (1) mündet, wobei dieser Hohlraum durch einen Deckel verschlossen ist, der auf diesen Abschnitt (3) des Prüfkörpers (1) aufgeschweisst ist.

9. Aufnehmer nach Anspruch 8, **dadurch gekennzeichnet, dass** ein zweiter Hohlraum (23) in den zweiten nicht verformbaren Abschnitt (3) des Prüfkörpers (1) eingelassen ist, wobei die Hohlräume (4) und (23) durch einen Durchgang (24) verbunden sind; wobei dieser zweite Hohlraum (23) durch eine Kabeldurchführung (5) mit der Aussenseite des Prüfkörpers (1) verbunden und durch einen Deckel verschlossen ist, der dicht auf diesen zweiten nicht verformbaren Abschnitt (3) des Prüfkörpers aufgeschweisst, aufgeklebt oder darauf fixiert ist.

10. Aufnehmer nach einem der Ansprüche 1 bis 7, **dadurch gekennzeichnet, dass** er zwei Hohlräume (4, 4'), die sich in je einem nicht verformbaren Bereich (2, 3) des Prüfkörpers (1) befinden, sowie zwei Messbalken (12, 12') umfasst, die auf je einem der Enden des Hauptbalkens (10) eingespannt und durch dünne Membranen (15, 15') mit den nicht verformbaren Abschnitten (2, 3) verbunden sind.

11. Aufnehmer nach Anspruch 10, **dadurch gekennzeichnet, dass** die Hohlräume (4, 4') durch einen Durchgang (26) verbunden sind, der durch den Hauptbalken (10) hindurchgeht, wobei einer der Hohlräume (4, 4') auf zumindest einer Seitenfläche des Prüfkörpers offen ist, und **dadurch**, dass die beiden Hohlräume (4, 4') dicht durch einen Deckel verschlossen sind.

## Claims

1. A sealed measurement sensor comprising a monolithic test body (1) having first and second non-deformable portions (2, 3) at its ends that are interconnected by a central portion forming a deformable parallelogram, the central portion of the test body (1) including two through openings (6, 7) defining between them a main beam (10), the sensor being **characterized by** the fact that at least one end of said main beam is fixed via an end restraint (13) to a measurement beam (12) integral with a non-deformable portion (2, 3) of the test body but mechanically decoupled therefrom; by the fact that at least one of the non-deformable portions (2, 3) of the test body includes at least one cavity (4, 4', 22) having a wall formed by the measurement beam (12) and by two membranes (15) situated on either side of the measurement beam (12), by the fact that strain gauges (17) are fastened inside the cavity (4) on the back of the measurement beam (12), and by the fact that the cavity (4) is closed by a cover (20) that is welded, adhesively bonded, or fastened in sealed manner on the corresponding non-deformable portion (2, 3) of the test body.

2. A sensor according to claim 1, **characterized by** the fact that the fixing of the end of the main beam (10) to the measurement beam (12) is rigid and enables torque to be transmitted from the main beam (10) to the measurement beam (12).

3. A sensor according to claim 1 or claim 2, **characterized by** the fact that the measurement beam (12) is connected laterally to the second non-deformable portion (3) of the test body via two thin membranes (15) allowing the measurement beam (12) to deform relative to the test body (1).

4. A sensor according to any one of claims 1 to 3, **characterized by** the fact that one of the ends of the main beam (10) is connected to the first non-deformable portion (2) of the test body (1), is flexible, and does not transmit torque.

5. A sensor according to any preceding claim, **characterized by** the fact that the cavity (4) passes transversely through the second non-deformable portion (3) of the test body (1) and is connected to the end edge of said non-deformable portion (3) by a cable passage (5), the two faces of the cavity (4) being closed by covers that are welded, adhesively bonded, or fastened in sealed manner on the second non-deformable portion (3) of the test body.

6. A sensor according to any one of claims 1 to 4, **characterized by** the fact that the cavity (4) opens out in the end edge face of the second non-deformable portion (3) of the test body (1) and by the fact that it is connected via a cable passage (5) to one of the side faces of the test body (1), the opening of said cavity (4) being closed by a cover that its welded, adhesively bonded, or fastened in sealed manner on the second non-deformable portion (3) of the test body.

7. A sensor according to any one of claims 1 to 6, **characterized by** the fact that the main beam (10) is rectilinear.

8. A sensor according to any one of claims 1 to 4, **characterized by** the fact that the main beam (10) is curved and that the cavity (4) opens out in one of the top or bottom edge faces (8, 9) of the second non-deformable portion (3) of the test body (1), said cavity being closed by a cover that is welded to said portion (3) of the test body (1).

9. A sensor according to claim 8, **characterized by** the fact that a second cavity (23) is formed in the second non-deformable portion (3) of the test body (1), the cavities (4, 23) being interconnected by a passage (24); the second cavity (23) being connected to the outside of the test body (1) via a cable passage (5) and being closed by a cover that is welded, adhesively bonded, or fastened in sealed manner on said second non-deformable portion (3) of the test body.

10. A sensor according to any one of claims 1 to 7, **characterized by** the fact that it has two cavities (4, 4') each situated in one of the non-deformable zones (2, 3) of the test body (1), and two measurement beams (12, 12') each fixed to one of the ends of the main beam (10) and connected by thin membranes (15, 15') to the non-deformable portions (2, 3).

11. A sensor according to claim 10, **characterized by** the fact that the cavities (4, 4') are interconnected by a passage (26) passing through the main beam (10), one of the cavities (4, 4') being open in at least one side face of the test body, and by the fact that both cavities (4, 4') are closed in sealed manner by a cover.
